(19) Europäisches Patentamt
European Patent Office
Office européen des brevets

(11) Veröffentlichungsnummer: **0 167 782 B1**

(12) **EUROPÄISCHE PATENTSCHRIFT**

(45) Veröffentlichungstag der Patentschrift: **26.06.91**

(51) Int. Cl.⁵: **B60T 8/00**

(21) Anmeldenummer: **85106640.7**

(22) Anmeldetag: **30.05.85**

(54) **Antiblockierregelsystem.**

(30) Priorität: **12.06.84 DE 3421732**

(43) Veröffentlichungstag der Anmeldung:
**15.01.86 Patentblatt 86/03**

(45) Bekanntmachung des Hinweises auf die
Patenterteilung:
**26.06.91 Patentblatt 91/26**

(84) Benannte Vertragsstaaten:
**DE FR GB IT SE**

(56) Entgegenhaltungen:
**US-A- 797 892**
**US-A- 9 264 773**

(73) Patentinhaber: **ROBERT BOSCH GMBH**
**Postfach 50**
**W-7000 Stuttgart 1(DE)**

(72) Erfinder: **Leiber, Heinz, Ing. (grad.)**
**Theodor-Heuss-Strasse 34**
**W-7141 Oberriexingen(DE)**

(74) Vertreter: **Kammer, Arno, Dipl.-Ing.**
**ROBERT BOSCH GmbH Zentralabteilung Pa-**
**tente Postfach 50**
**W-7000 Stuttgart 1(DE)**

**Beschreibung**

Die Aufrechterhaltung der Kurvenstabilität im Grenzgeschwindigkeitsbereich erfordert hohe Anforderungen an Fahrwerk und Bremsabstimmung. Zur Verbesserung der Bremsabstimmung sind druck- oder verzögerungsabhängige Minderer eingesetzt. Bei Letzterem wird nicht die Längsverzögerung zur Druckminderung, sondern die Querbeschleunigung zur Druckminderung verwendet, wie es beispielsweise in US-A-3 797 892 beschrieben ist. Die Aufrechterhaltung der Fahrstabilität, insbesondere bei Fahrzeugen mit obengenannten Einrichtungen, ist im Teilbremsgebiet möglich, wenn zumindest ein Vorderrad nicht blockiert und die Hinterachse am Blockieren verhindert wird. Besonders kritisch ist jedoch das leichte Anbremsen, welches typisch ist für die Fahrerreaktion, wenn er ungewollt zu schnell in die Kurve fährt. In diesem Fall bringt das ABS-System herkömmlicher Konfiguration, auch mit Select-low-Regelung der Hinterachse, keine Vorteile, da bei entlastetem Rad bereits zu viel Bremsschlupf entsteht, bis die Regelung anspricht.

Lösungsgedanke ist die Verwendung eines Querbeschleunigungsgebers, der bei Bremsung nach Überschreitung eines Schwellwertes das Einlaßventil der Hinterachse schließt und damit einen sehr geringen oder keinen Druckaufbau zuläßt. In diesem Fall behält die Hinterachse nahezu die volle Seitenstabilität. Dieser einfache funktionelle Zusammenhang kann erweitert werden durch Zeitfunktionen für die Druckhaltefunktion oder auch Eliminierung dieser Funktion, wenn beide Vorderräder sich im Regelbereich befinden. Die Vorteile gegenüber obengenannten Einrichtungen sind die Mitverwendung der ABS-Komponenten, wie Magnetventil und Steuergerät und Schaltungsteile desselben, die Möglichkeit der Ausnutzung der Geschwindigkeitsabhängigkeit der Zeitfunktion. Diese Maßnahmen machen das Fahrzeug bis in den Grenzbereich der Kurvenbremsung fahrstabil, was mit obengenannten Steuerfunktionen nicht der Fall ist. Darüber hinaus kann die Funktion überprüfbar gemacht werden durch eine entsprechende Testschaltung, die ohnehin im ABS-Steuergerät verwendet ist.

Anhand der Zeichnung werden Ausführungsbeispiele der Erfindung erläutert:

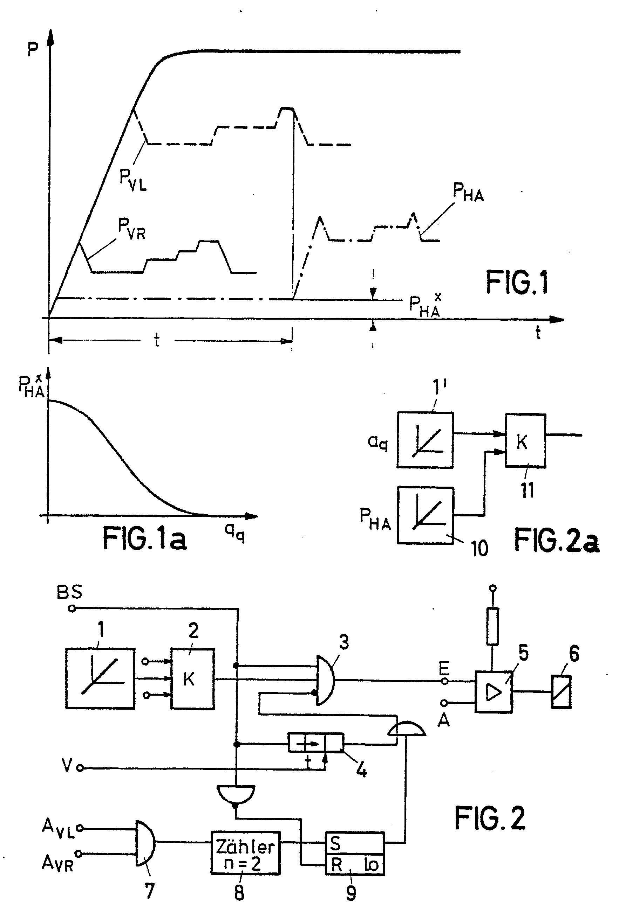

Fig. 1 zeigt den Druckverlauf an den Vorderrädern $P_{VR}$ und $P_{VL}$ und an der Hinterachse $P_{HA}$ in Abhängigkeit von der Zeit. Die Vorderräder werden bei hoher Querbeschleunigung bei unterschiedlichem Druckniveau instabil. Der Hinterachsdruck wird gemäß der Erfindung nach Beginn der Bremsung über eine Zeitbedingung auf einem bestimmten Wert $P_{HA}^x$ gehalten. Nach Ablauf dieser Zeit t wird der Druck aufgebaut, bis eines der Hinterräder (Select-low-Prinzip) instabil wird und die Regelung auslöst. Anstelle der Zeitbedingung, die auch geschwindigkeitsabhängig sein kann, kann auch eine logische Bedingung für die Beendigung der Konstanthaltung an der Hinterachse verwendet werden: Wenn beide Vorderräder typische Regelsignale zeigen, wird z-B. nach dem 2. Regelzyklus des kurvenäußeren Rades, das das höhere Druckniveau aufweist, der Druckanstieg für die Hinterachse freigegeben.

Fig. 1a zeigt die Steuerfunktion des Hinterachsdruckes in Funktion der Querbeschleunigung.

Fig. 2 zeigt ein Beispiel einer entsprechenden Schaltung. Das Analogsignal $a_q$ eines Querbeschleunigungsgebers 1 wird einen Komparator 2 zugeführt, welcher zwei Schaltschwellen besitzt entsprechend der Richtung bei Links- und Rechtskurven. Das Ausgangssignal des Komparators 2 wirkt auf ein UND-Gatter 3. Wenn bei einer ausreichenden Querbeschleunigung gebremst wird (Signal BS) und Zeitglied 4 noch kein Ausgangssignal abgibt, wird eine Endstufe 5 angesteuert, die im Ausführungsbeispiel ein Dreistellungsventil 6 ansteuert. Auf die Endstufe 5 wirkt ein E-Signal, das Druckhalten bewirkt. Mit Beginn der Bremsung wirkt das Signal BS des Bremslichtschalters auch auf das Zeitglied 4. Beim Überschreiten einer vorgegebenen Zeit wird durch das dann auftretende Signal das UND-Gatter 3 gesperrt, was zur Folge hat, daß der Hinterachsdruckaufbau ermöglicht wird. Diese Zeit kann geschwindigkeitsabhängig (Signal v) gemacht werden.

Als weitere Alternative ist denkbar, daß die Konstanthaltung mit Beginn des Regelsignals des entlasteten Vorderrades einsetzt. Anstelle des Zeitgliedes zur Sperrung des UND-Gatters kann eine logische Signalkombination aus den Regelsignalen der Vorderräder, z.B. für DruckabbauA verwendet werden: wenn beide Signale $A_{VL}$ und $A_{VR}$ vorliegen, wird über ein UND-Gatter 7 ein Zähler 8 aktiviert, der nach zwei Zählschritten einen Speicher 9 setzt, welcher dann das UND-Gatter 3 sperrt. Nach Lösung der BREMSE und Abfall des Bremslichtschaltersignals BS wird dieser Speicher 9 gelöscht.

Die Lösung kann weiterhin verfeinert werden durch Verwendung eines Hilfssignals aus einem Druckgeber, welcher den Druck im geregelten Kreis der Hinterachse sensiert. Das Blockschaltbild ist in Fig. 2a dargestellt. Hiermit soll die Charakteristik entsprechend Fig. 1a dargestellt werden. Beide Gebersignale des Querbeschleunigungsgebers 1' und eines Druckgebers 10 werden einem Komparator 11 zugeführt, dessen Schaltcharakteristik der der Fig. 1a entspricht.

**Ansprüche**

1. Antiblockierregelsystem für Straßenfahrzeuge, bei dem in Abhängigkeit von an den Rädern gewonnenen, das Radbewegungsverhalten kennzeichnenden Signalen der Bremsdruck an den Radbremsen im Sinne einer Verhinderung des Radblockierens geregelt wird, dadurch gekennzeichnet, daß bei Vorliegen einer Querbeschleunigung vorgegebener Größe an den Hinterradbremsen wenigstens eine Zeit lang ein geringer Bremsdruck eingesteuert wird.

2. Antiblockierregelsystem nach Anspruch 1, dadurch gekennzeichnet, daß die Zeit durch ein Zeitglied bestimmt ist.

3. Antiblockierregelsystem nach Anspruch 2, dadurch gekennzeichnet, daß die Zeit (t) geschwindigkeitsabhängig ist.

4. Antiblockierregelsystem nach Anspruch 1, dadurch gekennzeichnet, daß die Zeit beendet wird, wenn an beiden Vorderrädern eine Regelung stattfindet.

5. Antiblockierregelsystem nach einem der Ansprüche 1 - 4, dadurch gekennzeichnet, daß das oder die Regelventile an der Hinterachse in Stellung Druckkonstanthaltung gesteuert werden.

6. Antiblockierregelsystem nach Anspruch 5, dadurch gekennzeichnet, daß das Einlaßventil angesteuert wird, wenn bei der vorgegebenen Querbeschleunigung die Bremse betätigt wird.

7. Antiblockierregelsystem nach einem der Ansprüche 1 bis 5, dadurch gekennzeichnet, daß das Einlaßventil angesteuert wird, wenn bei Vorliegen der Querbeschleunigung die Regelung an einem der Vorderräder einsetzt.

8. Antiblockierregelsystem nach einem der Ansprüche 1 bis 7, dadurch gekennzeichnet, daß die vorgegebene Querbeschleunigung in Abhängigkeit vom Druck an den Hinterradbremsen änderbar ist (Fig. 1a).

## Claims

1. Anti-blocking control system for road vehicles, in which the brake pressure at the wheel brakes is controlled as a function of signals which are obtained at the wheels and characterise the motional behaviour of the wheels in order to prevent wheel lock-up, characterised in that, in the presence of a lateral acceleration of predetermined magnitude at the rear-wheel brakes, a low brake pressure is fed in for at least a time.

2. Anti-blocking control system according to Claim 1, characterised in that the time is determined by a timing element.

3. Anti-blocking control system according to Claim 2, characterised in that the time (t) is speed-dependent.

4. Anti-blocking control system according to Claim 1, characterised in that the time is terminated if control is taking place at both front wheels.

5. Anti-blocking control system according to one of Claims 1 - 4, characterised in that the control valve(s) at the rear axle are driven into the position for holding the pressure constant.

6. Anti-blocking control system according to Claim 5, characterised in that the inlet valve is activated if the brake is actuated at the predetermined lateral acceleration.

7. Anti-blocking control system according to one of Claims 1 to 5, characterised in that the inlet valve is activated if, in the presence of the lateral acceleration, control starts at one of the front wheels.

8. Anti-blocking control system according to one of Claims 1 to 7, characterised in that the predetermined lateral acceleration can be altered as a function of the pressure at the rear-wheel brakes (Fig. 1a).

## Revendications

1. Système de réglage anti-blocage pour véhicules routiers, système dans lequel en fonction des signaux obtenus sur les roues et caractérisant le comportement de ces roues en mouvement, la pression de freinage sur les freins de roues est réglée de façon à empêcher un blocage de la roue, système de réglage anti-blocage caractérisé en ce que, en présence d'une accélération transversale d'importance prédéfinie, une pression de freinage réduite est commandée pendant au moins un certain temps, sur les freins de roues arrière.

2. Système de réglage anti-blocage selon la revendication 1, caractérisé en ce que ce temps est déterminé par un organe de temporisation.

3. Système de réglage anti-blocage selon la revendication 2, caractérisé en ce que ce temps (t) dépend de la vitesse.

4. Système de réglage anti-blocage selon la revendication 1, caractérisé en ce que ce temps prend fin lorsqu'une régulation s'établit sur les deux roues avant.

5. Système de réglage anti-blocage selon une des revendications 1 à 4, caractérisé en ce que la vanne de réglage ou les vannes de réglage sur l'essieu arrière, sont commandées dans la position de maintien d'une pression constante.

6. Système de réglage anti-blocage selon la revendication 5, caractérisé en ce que la vanne d'admission est commandée à l'ouverture lorsque le frein est actionné pour l'accélération transversale prédéfinie.

7. Système de réglage anti-blocage selon une des revendications 1 à 5, caractérisé en ce que la vanne d'admission est commandée à l'ouverture lorsque, en présence de l'accélération transversale, la régulation est mise en oeuvre sur une des roues avant.

8. Système de réglage anti-blocage selon une des revendications 1 à 7, caractérisé en ce que l'accélération transversale prédéfinie est susceptible d'être modifiée en fonction de la pression sur les freins de roues arrière (figure 1a).

FIG.1

FIG.1a

FIG.2a

FIG.2